# EUROPEAN PATENT SPECIFICATION

(11) **EP 3 033 467 B1**
(45) Date of publication and mention of the grant of the patent: **01.01.2020**
(21) Application number: 14755757.3
(22) Date of filing: 14.08.2014
(51) Int. Cl.: G01J 1/02, G01J 1/04, G01J 1/42, G01J 1/32, E06B 9/68, H05B 37/02

(54) **PHOTOSENSITIVE ELEMENT ASSEMBLY**
LICHTEMPFINDLICHE ELEMENTANORDNUNG
ENSEMBLE ÉLÉMENT PHOTOSENSIBLE

(30) Priority: 14.08.2013 US 201361865774 P
(43) Date of publication of application: 22.06.2016
(73) Proprietor: Lutron Technology Company LLC, Coopersburg, PA 18036 (US)
(72) Inventor: BLAIR, Edward, J., Telford, PA 18969 (US); LUNDY, Stephen, Coopersburg, PA 18036 (US); SZOKE, Brandon, L., Walnutport, PA 18088 (US); KIRBY, David, A., Zionsville, PA 18092 (US)
(74) Representative: Wilson Gunn
(86) International application number: PCT/US2014/051061
(87) International publication number: WO 2015/023844

(56) References cited:
- WO-A1-2010/111250
- US-A1- 2010 188 009
- US-A1- 2012 133 287
- US-A1- 2012 286 676
- US-B2- 8 451 116

## Description

This application claims the benefit of priority of U.S. Provisional Patent Application No. 61/865,774, filed August 14, 2013.

### FIELD

This disclosure relates to sensors generally, and more specifically to sensors for measuring the illumination level of an environment.

### BACKGROUND

Automated window treatment control systems provide commands to motor drive units, which actuate window treatments, such as roller shades. U.S. Patent No. 8,288,981 describes an automated window treatment control system which uses date, time, location and façade orientation information to automatically adjust shade positions to limit the penetration depth of direct sunlight into a room. The system described in this patent can be operated independently of the weather, and does not require information regarding dynamic changes to the lighting environment, due to shadows or clouds.

Photosensitive elements, such as window sensors, can enhance the performance of window treatment control systems by working at the window level to communicate current exterior light conditions to the automated window treatment management system. The addition of photosensitive elements enables the system to respond appropriately, improve occupant comfort, and enhance the system's energy saving potential. The sensor provides the light management system with information to improve natural daylight, available views, and occupant comfort when shadows are cast on buildings as well as when cloudy or bright sunny weather conditions prevail. U.S. Patent No. 8,451,116 B2 describes a sensor assembly , comprising: a housing having a major face and a side edge, the side edge formed of a material that is capable of conducting light; a photosensitive element positioned within the housing and facing the major face of the housing.

One example aim of the invention is to enhance the light sensing capabilities of such known sensor assemblies.

### SUMMARY

In accordance with the present invention there is provided a sensor assembly having the characterizing features of claim 1.

### BRIEF DESCRIPTION OF THE DRAWINGS

FIG. 1 is an isometric view of a sensor assembly according to one embodiment.
FIG. 2 is a top plan view of the sensor assembly of FIG. 1.
FIG. 3 is a rear view of a front portion of the sensor assembly of FIG. 1.
FIG. 4 is a left side view of the front portion of the sensor assembly of FIG. 3.
FIGS. 5-7 are exploded views of the sensor assembly of FIG. 1.
FIG. 8 is a schematic diagram showing the amplitude of the response of the sensor assembly of FIG. 1, as a function of polar angle.
FIGS. 9 and 10 are diagrams of a window treatment control system including the sensor assembly of FIG. 1.
FIG. 11 shows the system of FIG. 9, installed in a different window configuration.
FIG. 12 shows the system of FIG. 9, with an optional third sensor.
FIG. 13 shows the system of FIG. 9, with the sensors mounted back-to-back on opposite faces of the same mullion.
FIG. 14 is a flow chart of an automated control method performed by the controller of FIG. 8.
FIGS. 15A and 15B show two alternative implementations of step 1112 of FIG. 14.
FIG. 16 shows an optional set of steps performed by the controller in the system of FIG. 12.
FIG. 17 is a flow chart of a method of installing and activating the systems of FIGS. 9-12.-

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

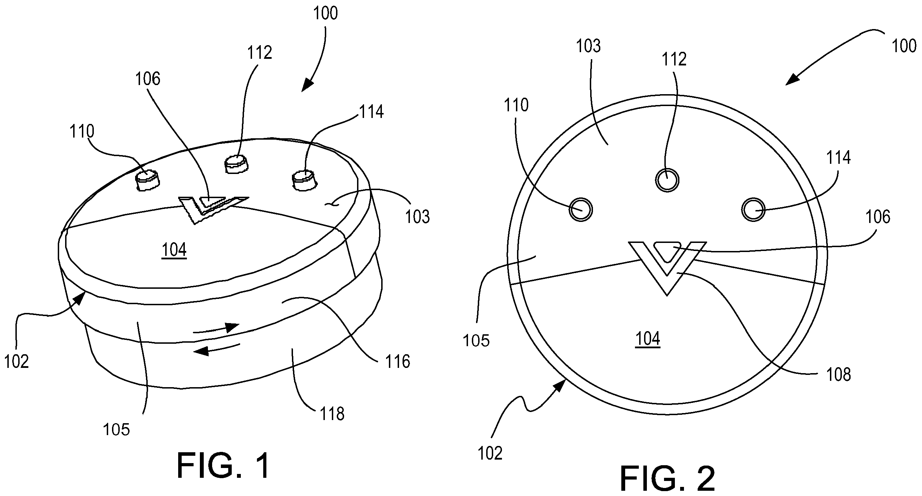

FIGS. 1 and 2 are isometric and top plan views of a sensor, e.g., a photosensitive element assembly 100, suitable for use in a window treatment control system.

The sensor assembly 100 has a housing 102 having a front portion 105 including a major face 103 and a side edge 116. At least a portion of the side edge 116 is formed of a material that is capable of transmitting light. In some embodiments, a diffuser portion 104 of the major face 103 subtending an arc of between 120 and 180 degrees is capable of transmitting light. For example, in the embodiment of FIGS. 1 and 2, the diffuser portion 104 of the major face 103 and the corresponding portion of side edge 116 form a light diffuser comprising 35 %

transmittance polycarbonate (FRCP), and is referred to below as "the diffuser." The major face 103 of the housing 102 has a circular shape and a first area, and the side edge 116 of the housing 102 has an area projection smaller than the first area.

The housing 102 has a rear portion, e.g., a back plate 118, suitable for mounting to an architectural surface, such as a mullion of a window. The housing 102 may be rotatable with respect to the back plate, to orient the sensor assembly to be most responsive to light in the location at which the sensor assembly 100 is mounted.

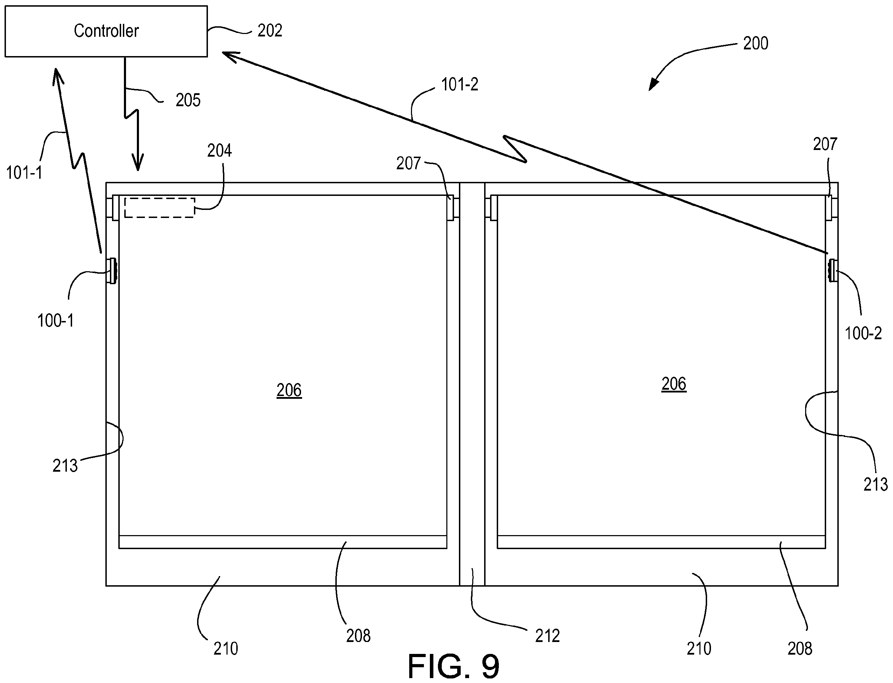

In the example of FIGS. 1 and 2, the sensor assembly 100 includes three actuators (e.g., buttons) 110, 112, and 114. In some embodiments, the actuator 110 causes generation of a calibration signal during setup for calibrating the sensor assembly 100. The actuator 112 causes the sensor assembly 100 to generate a test signal sequence. The actuator 114 causes the sensor assembly 100 to associate (e.g., register) itself with a system controller (e.g., system controller 202 described below with reference to FIG. 9), to which control signals (e.g., wireless signals) from the sensor assembly 100 are to be sent. In other embodiments, fewer or more actuators are provided, and the actuators can provide different functions. An example of a sensor assembly is described in greater detail in commonly-assigned U.S. Patent No. 8,451,116, issued May 28, 2013, entitled WIRELESS BATTERY-POWERED DAYPHOTOSENSITIVE ELEMENT.

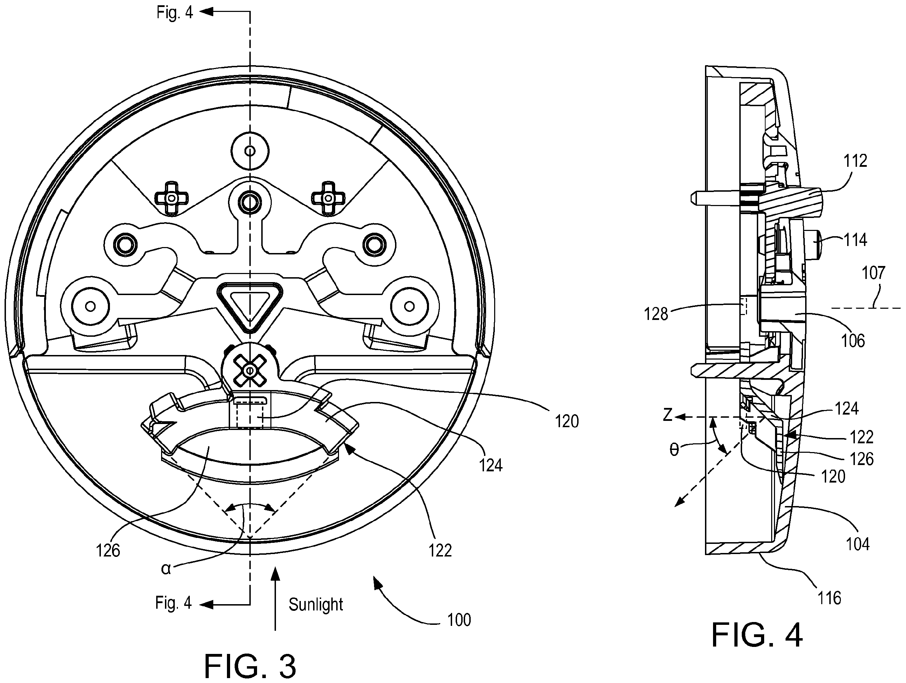

The front portion 105 can be rotated with respect to the back plate 118, such that indicia 108 (e.g., an arrow) can be rotated towards the direction of direct sunlight after mounting and/or towards or away from any location-specific glare source that may be identified (to be more responsive to the glare source, to protect a room occupant from glare). Some embodiments include an association mechanism for causing the sensor assembly 100 to transmit an association signal to the controller 202 that is to receive signals from the sensor assembly 100. For example, the sensor assembly 100 may transmit the association signal to the controller 202 in response to an actuation of the control 114. In some embodiments, the association mechanism includes a photodiode 128 (FIG. 4) and a light pipe 106 having a longitudinal axis 107 aligned with a direction normal to a surface of the photodiode 128. The light pipe 106 is configured to receive light entering from a direction that is not aligned with the axis and to transmit the received light onto the photodiode, for causing the sensor assembly 100 to transmit of the association signal to the controller 202.

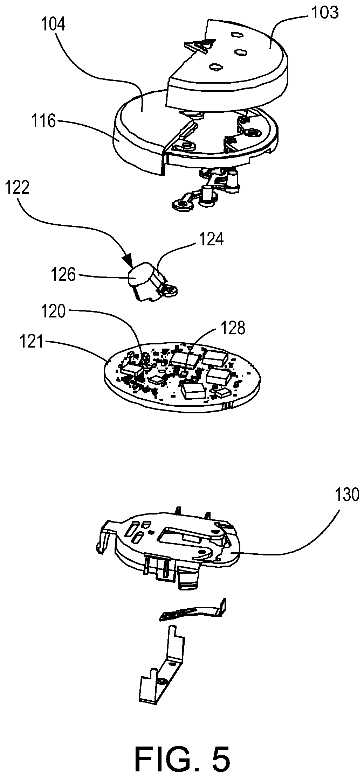

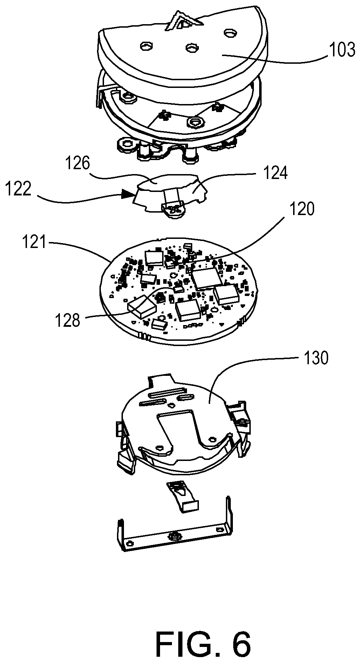

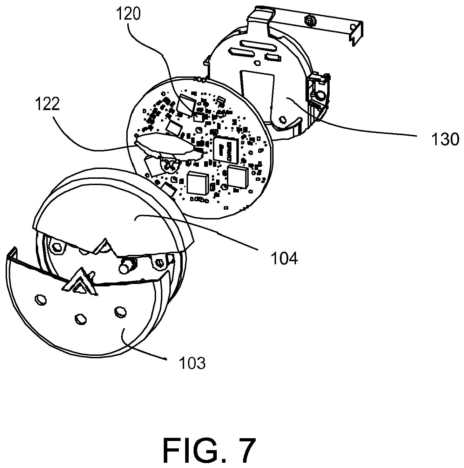

Reference is now made to FIGS. 3-7. FIG. 3 is a rear view of the front portion 105 of the sensor assembly 100, as viewed according to section line 3-3 of FIG. 1. FIG. 4 is a cross-sectional view of the front portion 105 of the sensor assembly 100 taken along section line 4-4 of FIG. 3. FIGS. 5-7 are exploded views showing interior components within the sensor assembly 100.

Referring to FIGS. 3 and 4, a photosensitive element 120 (e.g., a photosensitive diode, photodetector, or other suitable photosensitive circuit) is mounted to a printed circuit board (PCB) 121 and positioned within the housing 102, facing the major face 103 of the housing 102. The photosensitive element photosensitive element 120 can be a photodiode, a charge-coupled device sensor, a complementary metal oxide semiconductor (CMOS) sensor, or the like.

A reflector 122 is positioned within the housing 102. The reflector 122 is shaped to direct light entering through the side edge 116 of the housing 102 onto the photosensitive element 120. The reflector 122 is configured to increase the sensitivity of the sensor assembly 100 to light coming from the edge 116 of the sensor assembly 100, as well as light from other directions which are not normal to the major face 103 of the housing 102. For example, FIG. 4 shows the outward-facing normal direction Z. The reflector 122 increases sensitivity of the sensor assembly 100 to light which does not enter the diffuser 104, 116 from the normal direction Z. In some embodiments, the reflector is also configured to decrease sensitivity to light which enters from the normal direction Z.

As shown in FIGS. 3-5 and 7, in some embodiments, the reflector 122 has two main surfaces: a curved and slanted first surface 124, which reflects incoming light onto the photosensitive element 120, and a flat second surface 126, which blocks light entering the diffuser 104, 116 from the Z direction directly normal to the photosensitive element 120.

In FIGS. 3 and 4, the curved and slanted first surface 124 approximates a portion of a side surface of a cone, subtending an angle α, symmetric with a centerline of the photosensitive element 120. As shown in FIG. 4, a surface normal (as shown by 127) of the first surface 124 is from about 30 degrees to about 60 degrees (as shown by 129) from a direction Z normal to a plane containing a front face of the photosensitive element 120. In some embodiments, the surface normal of the first surface 124 is about 45 degrees from the direction Z normal to the plane containing the front face of the photosensitive element 120. As shown in FIG. 3, the first surface 124 has a curvature, such that a projection of the first surface 124 in the plane containing the front face of the photosensitive element curves around the photosensitive element 120.

As best seen in FIG. 4, the second surface 126 of the reflector 122 is configured to block light entering through the major face 103 of the housing 102 in a direction Z normal to the plane containing the front face of the photosensitive element 120. The second surface 126 can be planar, and parallel to the plane of the front face of the photosensitive element 120. In some embodiments, the diffuser portion 104 of the major face 103 of the housing is curved, and the second surface 126 extends radially till it substantially reaches the diffuser portion 104.

Reflector 122 has a surface finish that enhances its reflectivity and minimizes its absorptivity. In some embodiments, the reflector has a glossy white finish. In other embodiments, the reflector has a chrome finish.

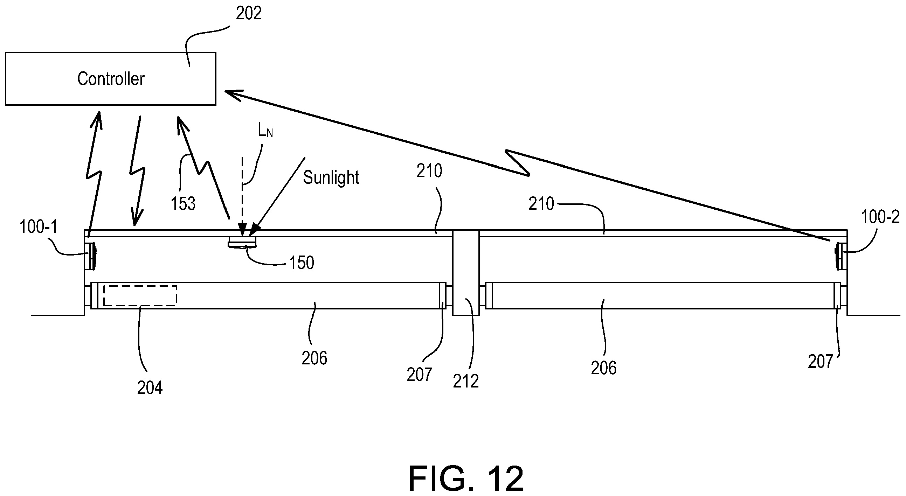

In some embodiments, the reflector 122 tunes the sensitivity of the sensor assembly 100 to light entering through the side edge 116 of the housing 102, and to light entering through the diffuser portion 104 of the major face 103. In some embodiments, the reflector 122 tunes the light sensitivity of the sensor assembly 100, so that combined outputs from a pair of the sensor assemblies 100 (e.g., sensor assemblies 100-1 and 100-2 in FIGS. 9-13) mounted with different orientations from each other approximate an output signal of a third sensor 150 (i.e., a third sensor assembly) discussed below in the description of FIG. 12. For example, the configuration of FIGS. 3-5 and 7 increases sensitivity to non-normal light and decreases sensitivity to normal light. For brevity, in the discussion that follows, the sensor assemblies 100-1 and 100-2 are also referred to as sensors 100-1, 100-2.

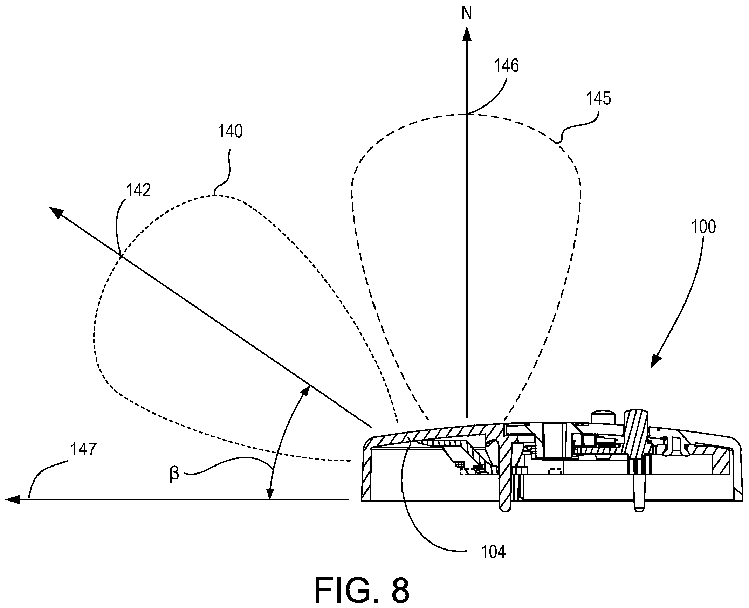

FIG. 8 shows the sensitivity 140 of sensor assembly 100 to incoming light at a locus of polar angles. The sensor assembly 100 has a maximum response to light entering the housing at a first angle β between 30 and 60 degrees away from a direction 147 that is normal to a plane of the window. In some embodiments, the sensor assembly 100 has a maximum response to light entering the housing at a first angle β between 40 and 50 degrees away from a direction 147 that is normal to a plane of the window. In some embodiments, the reflector 122 is configured so that the photosensitive element 120 has a greater response to a unit of light entering the housing at an angle of about 45 degrees away from normal to a plane of a front face of the photosensitive element 120 than to a unit of light entering the housing normal to the plane. In the example of FIGS. 3-5 and 7, the sensor assembly has the maximum response 142 to light entering at an angle of about 45 degrees.

Also shown in FIG. 8 for comparison is a curve of the response 145 of the same photosensitive element 120 without the reflector 122. The photosensitive element 120 has a maximum response 146 for light entering from the direction N normal to the plane of the front surface of the photosensitive element 120.

In some embodiments, the housing contains a communication circuit for communicating with the controller 202 (discussed below in the description of FIGS. 8-14), using a wired or wireless communications protocol.

In some embodiments, the communication circuit comprises a wireless transmitter and antenna element contained within the housing 102. In some embodiments, the antenna is a circular loop antenna located on the outer perimeter of the PCB 121 and configured for transmitting wireless signals from the sensor assembly 100 to the controller 202 located remotely from the sensor assembly. The sensor assembly 100 may further comprise a battery holder 130 with contacts coupled to provide power from a battery (not shown) to the transmitter. In some embodiments, the transmitter and antenna are used to transmit first and second sensor signals 101-1, 101-2 from respective first and second sensors 100-1, 100-2 wirelessly to the controller 202.

The sensor assembly 100 as described above can be used in a variety of systems and configurations. In some embodiments, the sensor assembly 100 is used in control systems for which the installer or customer chooses to mount the sensor assembly 100 with the back plate 118 perpendicular to a plane of the window.

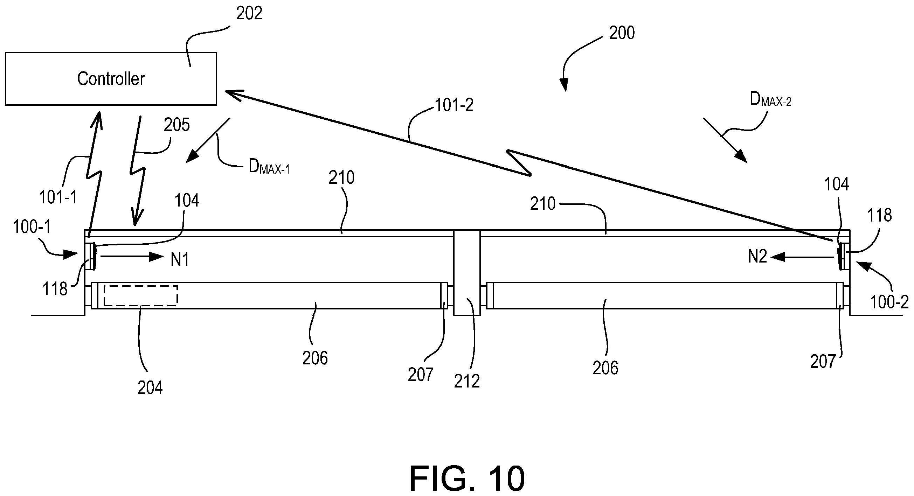

FIGS. 9 and 10 show an example of a system 200 including the sensor assembly 100 and the controller 202. Particularly, FIG. 9 is a side view and FIG. 10 is a top view of two motorized window treatments (e.g., motorized roller shades), each having an extendible shade material 206 hanging in front of a respective window 210. The exemplary sensor assembly 100 can be mounted with the back plate 118 on an architectural structure, such as a window mullion 212 or window frame 213. With the sensor assembly 100 mounted on the mullion 212 or frame 213 (and not on the surface of the windows 210), the center viewing portion of each window 210 is free from obstruction by any sensor assemblies. Also, if light entering through the center portion of each window is illuminating a task surface (e.g., a desktop), the sensor assembly 100 itself will not cast a large shadow. The side area projection of the sensor assembly 100 is smaller than the front (major) surface area, and when the sensor assembly is discretely disposed on the side face of an architectural structure, shadows cast by the sensor assembly 100 are minimized or eliminated.

Each motorized window treatment may be positioned adjacent at least one window 210 on a façade of a building. As mentioned above, the window treatment may be a motorized roller shade having the extendible shade material 206, the position of which is adjusted by rotating a roller tube 207 of the window treatment. In some embodiments, a motor drive unit (MDU, also referred to as an electronic drive unit, or EDU) 204 is provided to control the window treatment and may be located inside the roller tube 207 for rotating the roller tube so as to vary a position of the window treatment. An example of a motorized drive unit is described in greater detail in commonly-assigned U.S. Patent No. 6,983,783, issued June 11, 2006, entitled MOTORIZED SHADE CONTROL SYSTEM.

At least a first sensor assembly 100-1 and a second sensor assembly 100-2 are provided for generating respective first and second sensor signals 101-1, 101-2 including data representing an outdoor light level at the window 210. The controller 202 may comprise a processor in communication with one or more communication circuits (e.g., RF transceivers) configured to receive the first and second sensor signals 101-1, 101-2, and to transmit a control signal 205 to the MDUs of the motorized window treatments. For example, the processor of the controller 202 may comprise a microcontroller, a programmable logic device (PLD), a microcontroller, an application specific integrated circuit (ASIC), a field programmable gate array (FPGA), or other suitable control circuit.

In some embodiments, each motorized shade may have a respective MDU 204. In other embodiments, a single MDU 204 drives a group of motorized shades, which are mechanically coupled together and are adjusted together (e.g., as shown in Fig. 9). In some embodiments, each façade of a building has a respective MDU 204 that controls all of the respective shades on that façade on one floor. In some embodiments, the controller 202 may be configured for transmitting to at least two of the plurality of MDUs 204 the same command to automatically adjust the positions of the corresponding ones of the plurality of window treatments based on the combined first and second sensor signals 101-1, 101-2. In other embodiments, MDU's and shade groups are configured to implement another desired control strategy. For example, a window treatment having its view of the sun obstructed by a large tree can be controlled separately from other window treatments on the same floor of the same façade, which have clear lines-of-sight to the sun.

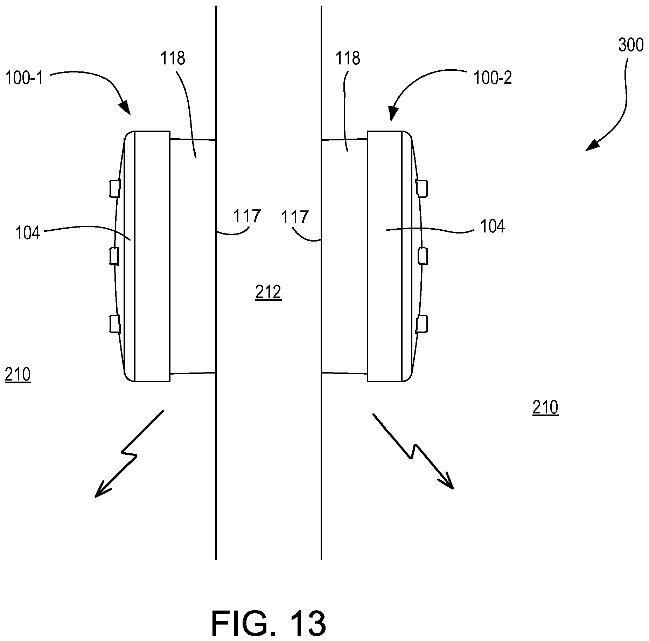

The first and second sensor assemblies 100-1, 100-2 are oriented so that an outward facing normal N to a plane of a rear surface 117 of the housing of the second sensor assembly 100-2 is in an opposite direction from an outward facing normal to a plane of a rear surface 117 of the housing of the first sensor assembly 100-1, as shown in FIG. 13. (The rear surface 117 of the sensor assembly 100-1, 100-2 faces and abuts the surface to which the sensor assembly is mounted. Thus, the first and second sensor assemblies 100-1, 100-2 are oriented so that an outward facing normal N to a plane of a front surface of the photosensitive element 120 of second sensor assembly 100-2 is in an opposite direction from an outward facing normal to a plane of a front surface of the photosensitive element 120 of the first sensor assembly 100-1. In some embodiments, the first and second sensor assemblies 100-1, 100-2 are configured identically to each other, but the sensor assemblies are mounted so that their respective rear surfaces face in different directions from each other, and their respective photosensitive elements 120 face different directions from each other.

For example, in FIG. 10, sensor assembly 100-1 is mounted facing a normal direction N1, and sensor assembly 100-2 is mounted facing a normal direction N2, which is opposite to the direction N1. Because sensor assemblies 100-1 and 100-2 face in opposite directions, they each have a respectively different direction of greatest sensitivity to incoming light. Sensor assembly 100-1 has the greatest response to light entering from a direction D_{MAX-1}, while sensor assembly 100-2 has the greatest response to light entering from a direction D_{MAX-2}. For example, if the windows of FIG. 10 are on a south-facing façade, sensor assembly 100-1 is most sensitive to light entering from approximately the southwest direction (late afternoon), and sensor assembly 100-2 is most sensitive to light entering from approximately the southeast direction (mid-morning). Thus, the fields of view of the first and second sensor assemblies 100-1, 100-2 (and their respective photosensitive elements 120) are symmetric about a direction normal to the window 210.

The controller 202 is configured for combining the data (e.g., the measured light levels) of the first and second sensor signals 101-1, 101-2, and transmitting to the motor drive unit a control signal 205 including a command to automatically adjust a position of the window treatment 206 based on the combined first and second sensor signals (e.g., 101-1+101-2).

In some embodiments, the combining includes arithmetically summing the measured light levels of the first sensor signal 101-1 and the second sensor signal 101-2, without applying differential weights to the measured light levels of the first and second sensor signals.

In some embodiments, the sensor assemblies 100-1 and 100-2 operate independently of each other, and the controller 202 receives the first sensor signals 101-1 and the second sensor signals 101-2 asynchronously. In some embodiments, the controller 202 polls the first and second sensor assemblies 100-1 and 100-2 at different times, and/or receives the first sensor signals 101-1 and the second sensor signals 101-2 at correspondingly different times. Thus, the signals from the two sensor assemblies are not necessarily received at the same time. In some embodiments, the combining includes: receiving the first sensor signal and the second sensor signal asynchronously, and summing the measured light level from a most recently received first sensor signal with the measured light level from a most recently received second sensor signal. In some embodiments the controller 202 sums of the measured light levels from the most recently received first sensor signal 101-1 and second sensor signal 101-2 each time the controller 202 receives either one of the first or the second sensor signal.

The exemplary sensor assembly 100 is suitable for mounting in pairs to two oppositely facing structural members, such as mullions 212, or window frame members 213, such that the sum of the output signals from a pair of sensor assemblies approximates the output of a single photosensitive element 120 of the same type oriented with the front surface of the sensor parallel to the window (or façade), where the single, normally oriented photosensitive element does not have a reflector 122.

For example, on a south facing façade in the northern hemisphere, the first sensor assembly 100-1 is mounted on the west facing side of a first mullion 212, and the second sensor assembly 100-2 is mounted on the east facing side of a second mullion 212. During morning hours, the second sensor assembly 100-2 outputs a signal that approximates the output of a sensor assembly oriented parallel to the plane of the window, and the first sensor assembly 100-1 outputs a low signal value. During the late afternoon hours, the first sensor assembly 100-1 outputs a signal that approximates the output of a sensor assembly oriented parallel to the plane of the window, and the second sensor assembly 100-2 outputs a low signal value. Near solar noon, each of the two sensor assemblies 100-1, 100-2 outputs a value approximately one half of the value of a sensor assembly oriented parallel to the plane of the window.

As noted above, the sensor assemblies 100 can be mounted in pairs to oppositely facing surfaces, and the controller 202 is programmed to treat the sum of their output signals as a single measure of the light level. In such embodiments, in the event that one of the two sensor assemblies 100-1, 100-2 is inoperable (e.g., due to inadequate battery voltage), the controller does not use the signal from the remaining sensor assembly. The controller 202 is configured for identifying a sensor failure if either one, or both, of the first sensor assembly or the second sensor assembly is not operational, and enter an operating mode for controlling the motor drive unit without using the first sensor signal and without using the second sensor signal, when the sensor failure is identified. For example, upon detection of a failure of either sensor assembly 100-1, 100-2, the controller 202 can be programmed to control operation of the window treatments to limit depth of penetration of direct sunlight into the room in response to a calculated or predicted position of the sun. In some embodiments, if a failure of either sensor assembly 100-1, 100-2 is detected, the system switches to control the penetration depth of direct sunlight according to the method described in U.S. Patent No. 8,288,981

In some installations, a plurality of window treatments are provided on the façade, including a leftmost window treatment having a leftmost edge and a rightmost window treatment having a rightmost edge. In some embodiments, the first sensor assembly 100-1 is mounted at the leftmost edge and the second sensor assembly 100-2 is mounted at the rightmost edge as shown in FIGs. 9 and 10.

Mounting the two sensor assemblies at opposite boundaries of the window group to be controlled together provides an additional benefit in assisting the controller 202 to respond appropriately to transient shadows (e.g., large or slow moving clouds). Because the controller responds to the sum of the outputs from both sensor assemblies 100-1, 100-2, if the shades are closed, the controller 202 can detect a decrease in illumination when one sensor assembly enters the cloud's shadow, but the total illumination is still bright until direct sun is blocked from entering the whole window area by the cloud. Thus, the controller 202 does not open the shades immediately when the first sensor assembly 100-1 enters the shade of the cloud. When both sensor assemblies 100-1 and 100-2 measure the reduced illumination level, the controller 202 can safely open the shades without risk of glare to occupants. There is no need to include a delay after every change in lighting condition, to account for the time it takes for a cloud to move across the field of view of the window.

On the other hand, if the shades are opened, and either sensor assembly 100-1, 100-2 detects a large increase in illumination, the controller 202 can immediately close the shades to avoid occupant discomfort. As soon as either right or left boundary of the controlled window treatment area enters bright light, appropriate action can be performed.

The boundary of the shade control group can be at an edge of a wall, or at a mullion between two windows. Thus, in some embodiments, the at least one window 210 includes at least two windows 210 with a first mullion 212 and a second mullion 212. The first sensor assembly 100-1 is mounted on a first side face of the first mullion 212, facing in a first direction parallel to a major face of the window 210. The second sensor assembly 100-2 is mounted on a second side face of the second mullion 212, facing in a second direction opposite to the first direction.

Although FIGS. 9 and 10 show an example in which the window treatment group includes two shades 206 controlled by a single MDU 204, the sensor assemblies 100-1, 100-2 can be mounted at the boundary of a sensor control group having any number of windows (e.g., 1,2,3,...)

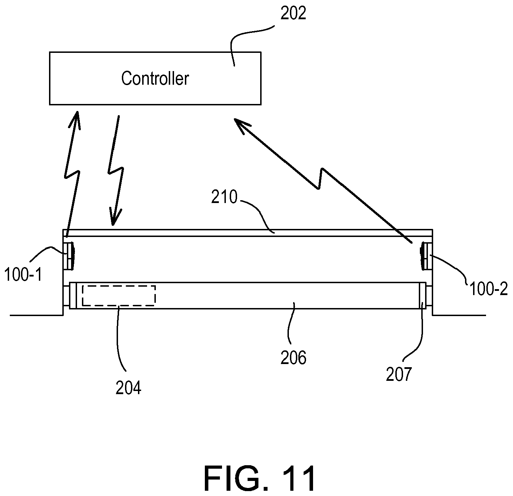

For example, FIG. 11 shows an example in which the at least one window comprises a single window 210, including a leftmost edge and a rightmost edge. The first sensor assembly 100-1 is mounted adjacent the leftmost edge, and the second sensor assembly 100-2 is mounted adjacent the rightmost edge.

Although FIGS. 10 and 11 show systems in which a control group includes two sensor assemblies, other embodiments can include additional sensor assemblies. For example, a sensor configuration for a single control group can include four sensor assemblies (left-top, left-bottom, right-top, and right-bottom). If the sensor assembly described above with reference to FIGS. 1-7 is used, then the controller 202 divides the sum of the sensor output values from the four sensor assemblies by two.

FIG. 12 shows a system having a third sensor assembly 150, which can be of a different type than sensor assemblies 100-1, 100-2. For example, sensor 150 can be a "WINDOW MOUNT RADIO WINDOW SENSOR" (RWS), sold by Lutron Electronics Co., Inc. of Coopersburg, PA. The RWS is a sensor assembly configured to be placed on the inside face of a window 210, with the sensor directed towards the window facing side. The RWS has the greatest response to light entering from a direction normal to the plane of the window, as indicated by the normal component of light, L_{N} in FIG. 12. The third sensor assembly 150 faces in the direction normal to the plane of the window 210. The third sensor assembly 150 provides third sensor signals 153 representing an outdoor light level at the window 210. The third sensor assembly 150 has its maximum response when the sunlight enters from a direction normal to the window, near solar noon.

As noted above, the first sensor assembly 100-1 has a maximum response to light entering the housing at a first angle β between 30 and 60 degrees away from a direction 147 that is normal to a plane of the window 210. The second sensor assembly 100-2 has a maximum response to light entering the housing at a second angle β between 30 and 60 degrees away from the direction normal to the plane of the window. The first angle and second angle are different from each other. In some embodiments, the first angle and second angle are symmetric around the direction normal to the plane of the window (i.e., the first and second angles are equal in magnitude and opposite in sign from each other). The first and second sensor assemblies have their maximum responses at mid-morning and late afternoon, respectively. Thus, each sensor assembly 100-1, 100-2, 150 has it maximum response at a respectively different time.

In some embodiments, the controller 202 is configured for selecting either the third signal 153 or the combination of the first and second sensor signals 101-1, 101-2.

The controller 202 is configured to transmit to the motor drive unit 204 a second command to automatically adjust a position of the window treatment 206 based on the selected signals.

In some embodiments, the selection is based on whether a value of the third sensor signal is greater than a value of the combination of the first and second sensor signals. In some embodiments, the first, second and third sensor assemblies 100-1, 100-2, 150 include the same photo detector (sensing element). This criterion assumes that at any given time, whichever value is greater should be used to control the window treatments, so that any error is resolved in favor of closing the shades more to avoid direct sun glare and discomfort to occupants.

In other embodiments, the selection is based on a solar angle of incidence of the common facade. Thus, the measurements from sensor assemblies 100-1, 100-2 are selected throughout the day, except near solar noon, when the third sensor assembly 150 has its greatest response.

FIG. 13 shows another mounting configuration for the sensor assemblies 100-1 and 100-2 of FIGS. 1-7. In FIG. 10, the window 210 includes two windows on the common façade, including a left window 210 and a right window 210 with a mullion 212 therebetween. The system can have one or more mullions 212. The first sensor assembly 100-1 is mounted on a first side face of the mullion 212, facing in a first direction parallel to a major face of the window. The second sensor assembly 100-2 is mounted on a second side face of the one mullion 212, facing in a second direction opposite to the first direction.

In some embodiments, the first and second sensor assemblies 100-1, 100-2 are mounted back-to-back. The first sensor assembly 100-1 is mounted on a left face of the mullion 212. The second sensor assembly 100-2 is mounted on a right face of the same mullion 212 as the first sensor assembly 100-1. In this configuration, the second sensor assembly 100-2 still faces in the opposite direction from the first sensor assembly 100-1. Thus, each sensor assembly 100-1, 100-2 has a respectively different response curve with respect to light coming from different directions. The response curves of the two sensors assemblies 100-1, 100-2 are symmetric about a direction normal to the plane of the windows 210.

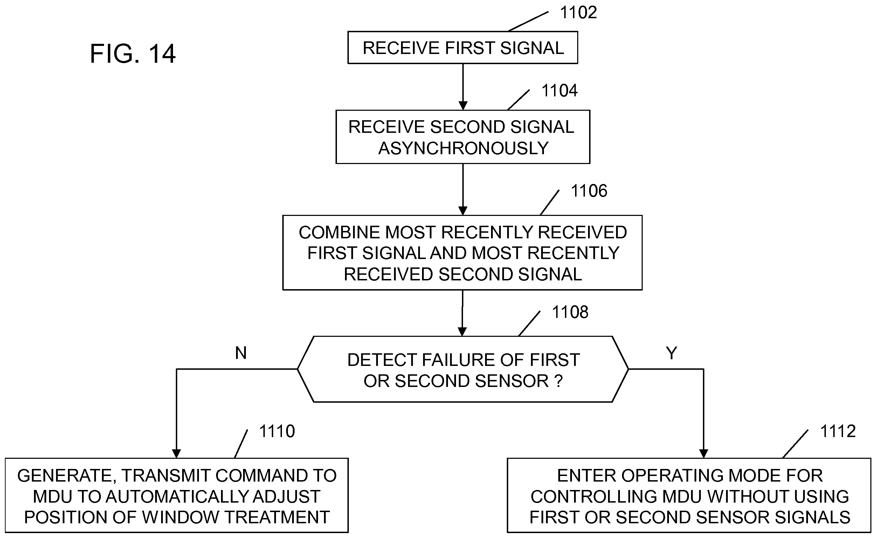

FIG. 14 is a flow chart of a method performed by the controller 202. The logic circuits of the controller 202 are programmed by software instructions to operate as a special purpose computer for performing this method.

At step 1102, the controller 202 receives a first sensor signal 101-1 from the first sensor assembly 100-1.

At step 1104, the controller 202 receives a second sensor signal 101-2 from the second sensor assembly 100-2, asynchronously from the first signal 101-1.

At step 1106, the controller 202 combines the first sensor signal 101-1 and the second sensor signal 101-2 from the first sensor assembly 100-1 and the second sensor assembly 100-2, respectively. The first and second sensor signals 101-1, 101-2 each represent an outdoor light level at a window 210. The first and second sensor assemblies 100-1, 100-2 are oriented so that the outward-facing normal to the plane of the rear surface 117 of the sensor assembly 100-2 is in an opposite direction from the outward-facing normal to the plane of the rear surface 117 of the sensor assembly 100-2. Thus, an outward-facing normal to a plane of a front surface of the photosensitive element 120 of the second sensor assembly 100-2 is in an opposite direction from an outward-facing normal to a plane of a front surface of photosensitive element 120 of the first sensor assembly 100-1. In some embodiments, the combining includes summing the first sensor signal 101-1 and the second sensor signal 101-2. In some embodiments, the combining includes: receiving the first sensor signal 101-1 and the second sensor signal 101-2 asynchronously; and summing a most recently received first sensor signal with a most recently received second sensor signal. The summing is performed each time the controller receives either one of the first or the second sensor signals 101-1, 101-2.

At step 1108, the controller 202 identifies a sensor failure, if the photosensitive element 120 of either one of the first sensor assembly 100-1 or the second sensor assembly 100-2 is not operational. If there is a sensor failure, step 1112 is performed. Otherwise, step 1110 is performed.

At step 1110, the controller 202 transmits to a motor drive unit 204 a command to automatically adjust a position of a window treatment 206 based on the combined first and second sensor signals 101-1, 101-2.

At step 1112, the controller 202 enters an operating mode for controlling the motor drive unit without using the first sensor signal 101-1 and without using the second sensor 101-2 signal, when the sensor failure is identified.

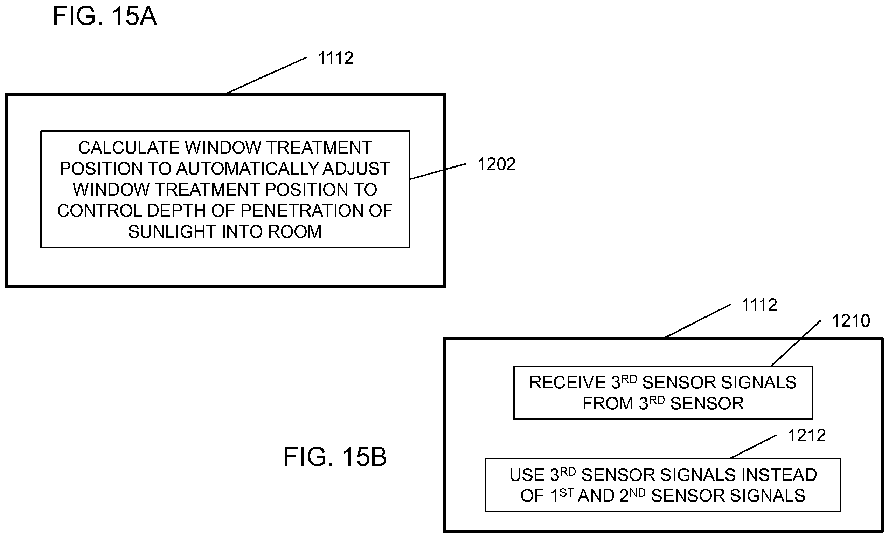

For example, as shown in FIG. 15A, during step 1112, the controller 202 can control the shades 206 without using the first and second sensor signals 101-1, 101-2, by performing step 1202, calculating the window treatment position to automatically control penetration depth of direct sunlight as described in U.S. Patent No. 8,288,981.

In other embodiments, as shown in FIG. 15B, during step 1112, the controller 202 can control the shades 206 without using the first and second sensor signals 101-1, 101-2, by performing step 1210, receiving the third sensor signals 153 from the third sensor assembly 150, and performing step 1212, using the third sensor signals 153 instead of the first and second sensor signals 101-1, 101-2.

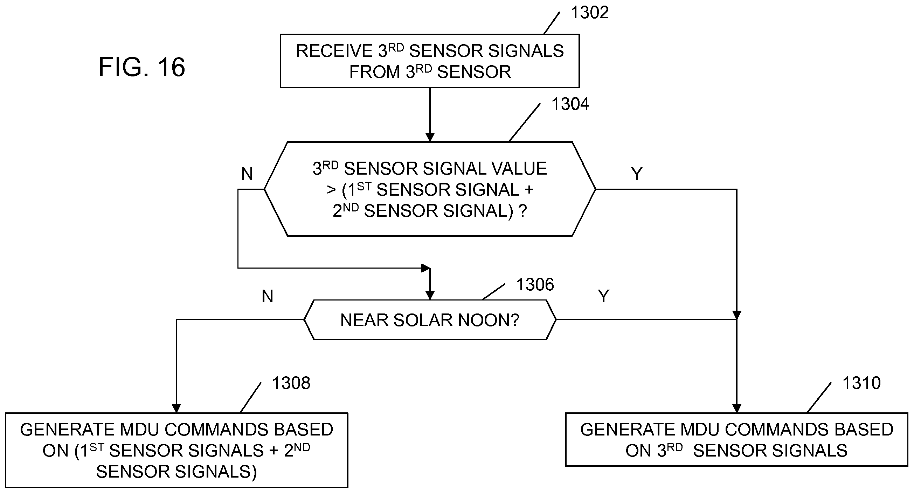

FIG. 16 shows an optional set of steps that can be performed by the controller 202 in configurations as shown in FIG. 12, having three sensor assemblies. These optional steps can be performed at any time. This optional set of steps is performed in addition to combining a first sensor signal 101-1 and a second sensor signal 101-2 from at least a first sensor assembly 100-1 and a second sensor assembly 100-2, respectively, as described with reference to FIG. 14. The first and second sensor signals 101-1, 101-2 represent an outdoor light level at a window. The first sensor assembly 100-1 has a first field of view, and the second sensor assembly 100-2 has a second field of view different from the first field of view. The first and second fields of view are symmetric about a direction normal to a major face of the window.

At step 1302, the controller 202 receives third sensor signal 153 representing an outdoor light level at the window from a third photosensitive element 150 facing in the direction normal to the plane of the window 210.

At steps 1304 and 1306, the controller 202 selects either the third signal 153 or the combination of the first and second sensor signals 101-1, 101-2.

At step 1304, the controller 202 determines whether a value of the third sensor signal 153 is greater than a value of the combination of the first and second sensor signals 101-1, 101-2. If the value of the third sensor signal 153 is greater, step 1310 is performed. Otherwise, step 1306 is performed.

At step 1306, the controller 202 determines whether a solar angle of incidence of the direction normal to the major face of the window represents an angle near solar noon. If it is near solar noon, step 1310 is performed. Otherwise, step 1308 is performed. The threshold, below which a solar angle of incidence is considered to be "near zero," is selected so that the third sensor assembly is expected to provide a stronger response to incoming light than the combined signals from the first and second sensor assemblies whenever the solar angle of incidence is "near zero" (i.e., less than that threshold). For example, if the first and second sensor assemblies provide greatest response to light entering with a solar angle of incidence between 30 and 60 degrees, and the third sensor assembly provides the greatest response when the light enters at a solar angle of incidence from 0 to 30 degrees, then the solar angle of incidence can be considered "near zero" when the solar angle of incidence is less than 30 degrees. Similarly, if the first and second sensor assemblies provide greatest response to light entering with a solar angle of incidence between 15 and 45 degrees, and the third sensor assembly provides the greatest response when the light enters at a solar angle of incidence from 0 to 15 degrees, then the solar angle of incidence can be considered "near zero" when the solar angle of incidence is less than 15 degrees.

At step 1308, the controller 202 selects to use the sum of the first and second sensor signals 101-1, 101-2. The controller 1302 generates MDU commands based on the sum of the first and second sensor signals 101-1, 101-2.

At step 1310, the controller 1302 selects to use the third sensor signal 153. The controller 202 generates MDU commands based on the third sensor signal 153.

Then, the generated MDU commands are transmitted to the motor drive unit to automatically adjust a position of the window treatment based on the selected signals.

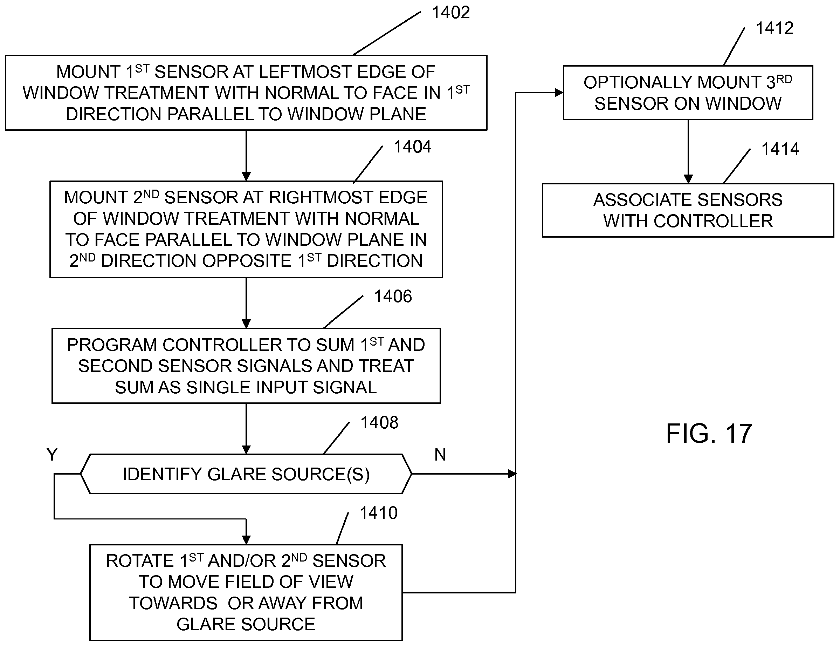

FIG. 17 is a flow chart of an example of an installation method for the system. The system has at least one window treatment positioned adjacent at least one window on a façade of a building, and a motor drive unit is provided for controlling the window treatment for varying a position of the window treatment.

At step 1402, at least a first sensor assembly is mounted in a vicinity of the window, for generating first sensor signals representing an outdoor light level at the window. The first sensor assembly facing in a first direction perpendicular to a major face of the window.

At steps 1404, at least a second sensor assembly is mounted in the vicinity of the window, for generating second sensor signals representing an outdoor light level at the window. The second sensor assembly faces a direction perpendicular to the major face of the window, in a direction opposite the direction of the first sensor assembly. In some installations, the installer mounts the first sensor assembly and the second sensor assembly on side faces of one or more mullions. In some installations, the window has a leftmost edge and a rightmost edge, and the mounting step includes mounting the first sensor assembly on one of the mullions adjacent the leftmost edge, and mounting the second sensor assembly on one of the mullions adjacent the rightmost edge. In other installations, the window includes a first window and a second window with a mullion therebetween, and the mounting step includes mounting the first sensor assembly and the second sensor assembly on side faces of the mullion between the first and second windows.

At step 1406, a controller is programed to combine the first and second sensor signals, and process the combined signal as a single input signal, for generating a command to automatically adjust a position of the window treatment. In some embodiments, step 1406 is performed using a graphical-user interface (GUI) running on a desktop computer, laptop computer or tablet. This step can be performed before the mounting steps 1402, 1404.

At step 1408, a determination is made whether a glare source is present. For example, the installer can observe a metallic object within the field of view of the window. If a glare source is identified, the installer performs step 1410. Otherwise, step 1412 is performed next.

Each of the first sensor assembly and second sensor assembly may be rotatable with respect to a mounting plate thereof. Step 1410 is optionally performed in some systems. At step 1410, having identified a glare source, the installer may rotate at least one of the first and second sensor assemblies to move a field of view of that sensor assembly towards the glare source, after the mounting step.

Step 1412 is optionally performed in some systems. In step 1412, a third sensor assembly is mounted on the window. The third sensor assembly has a field of view with a maximum response to light entering from a direction 147 that is normal to the plane of the window.

In some embodiments, after step 1412: a step of associating the sensor assemblies with the controller is performed. This may be done by pressing a button (e.g., actuator 114) on one of the sensor assemblies when prompted by the GUI running a setup program on the desktop computer, laptop computer or tablet. For example, the installer may highlight a graphic of the right sensor in the GUI software and then press the button on the right sensor assembly 100-2 to associate the right sensor assembly with the controller. The user can then associate the left sensor assembly 100-1 with the controller.

In some embodiments the laser activation step 1414 described below is one of the options for performing this association step. Rather than pressing a button on the sensor assembly, the installer can point the laser at the light-pipe on one of the sensor assemblies 100-1, 100-2 to simulate the button press if the sensor assembly is out of reach.

Step 1414 is optionally performed for sensor assemblies 100 which permit laser activation. Each of the first and second sensor assemblies has a light pipe 106 having a longitudinal axis aligned with a direction normal to a surface of a photodiode 128. The light pipe is configured to receive light entering from a direction that is not aligned with the axis and to transmit the received light onto the photodiode, for causing transmission of an activation signal to the controller. The installer shines a collimated light (e.g., a laser) at the light pipe from a direction that is not aligned with the longitudinal axis, so as to cause the light pipe to transmit the collimated light to the photodiode for transmitting the activation signal. For example, in an installation where the sensor assemblies 100-1, 100-2 are installed on mullions 212 near the top of one or more windows 210, the installer can stand anywhere with a line-of-sight to each light pipe 106, and shine a laser on the light pipes. The installer does not have to move close to the light pipe, or move to a position directly in front of the sensor assemblies 100.

The controller 202 in the examples described above processes the signals 101-1, 101-2 from the sensor assemblies 100-1, 100-2 for controlling an electrical load such as a motorized drive unit 204 for a window treatment 206. In other embodiments, the signals can be used to control other types of electrical loads. Such loads can include, but are not limited to, electrical lighting and/or a heating, ventilation and air conditioning (HVAC) system (not shown).

In various embodiments, a controller 202 is provided for use in a load control system for controlling an electrical load. The controller 202 comprises a processor configured to: combine a first sensor signal 101-1 and a second sensor signal 101-2 from at least a first sensor assembly 100-1 and a second sensor assembly 100-2, respectively. The first and second sensor signals 101-1, 101-2 represent a light level at a window 210. The first and second sensor assemblies 100-1, 100-2 are oriented so that the photosensitive element 120 of the first sensor assembly 100-1 has a maximum response to light entering a housing 102 of the first sensor assembly 100-1 at a first angle β with respect to a normal 147 of a plane of the window 210, and the photosensitive element 120 of the second sensor assembly 100-2 has a maximum response to light entering a housing of the second sensor assembly at a second angle with respect to the normal 147 of the plane of the window 210. The second angle is different from the first angle. The controller 202 is configured to transmit a command 205 to automatically control the electrical load based on the combined first and second sensor signals 101-1, 101-2.

In some embodiments, the processor of controller 202 is configured to identify a sensor failure if either one of the photosensitive element 120 of first sensor assembly 100-1 or the photosensitive element 120 of the second sensor assembly 100-2 is not operational, and enter an operating mode for controlling the electrical load without using the first sensor signal and without using the second sensor signal, when the sensor failure is identified.

The methods and system described herein may be at least partially embodied in the form of computer-implemented processes and apparatus for practicing those processes. The disclosed methods may also be at least partially embodied in the form of tangible, non-transitory machine readable storage media encoded with computer program code. The media may include, for example, RAMs, ROMs, CD-ROMs, DVD-ROMs, BD-ROMs, hard disk drives, flash memories, or any other non-transitory machine-readable storage medium, wherein, when the computer program code is loaded into and executed by a computer, the computer becomes an apparatus for practicing the method. The methods may also be at least partially embodied in the form of a computer into which computer program code is loaded and/or executed, such that, the computer becomes a special purpose computer for practicing the methods. When implemented on a general-purpose processor, the computer program code segments configure the processor to create specific logic circuits. The methods may alternatively be at least partially embodied in a digital signal processor formed of application specific integrated circuits for performing the methods.

## Claims

1. A sensor assembly (100), comprising:
a housing (102) having a major face (103) and a side edge (116) wherein at least a portion of the side edge (116) is formed of a material that is capable of conducting light;
a photosensitive element (120) positioned within the housing (102) wherein the photosensitive element (120) comprises a front face that faces the major face (103) of the housing (102); and
the sensor assembly **characterized in that** the sensor assembly further comprises:
a reflector (122) positioned within the housing (102), the reflector (122) shaped to direct light entering through the side edge (116) onto the photosensitive element (120), and
wherein the reflector (122) is further configured to block the front face of the photosensitive element (120) from being exposed to light entering through the major face (103) in a direction normal to a plane containing the front face of the photosensitive element (120).

2. The sensor assembly of claim 1, wherein the reflector (122) has a first surface (124) oriented so that a surface normal of the first surface is from about 30 degrees to about 60 degrees from the direction normal to the plane containing the front face of the photosensitive element (120).

3. The sensor assembly of claim 2, wherein the surface normal of the first surface is about 45 degrees from the direction normal to the plane containing the front face of the photosensitive element (120).

4. The sensor assembly of claim 2, wherein the first surface (124) has a curvature, such that a projection of the first surface (124) in the plane containing the front face of the photosensitive element (120) curves around the photosensitive element (120).

5. The sensor assembly of claim 2, wherein the reflector (122) has a second surface (126) parallel to the major face (103) to block the front face of the photosensitive element (120) from being exposed to the light entering through the major face (103) in the direction normal to the plane containing the front face of the photosensitive element (120).

6. The sensor assembly of claim 1, wherein the reflector (122) is configured so that the photosensitive element (120) has a greater response to a unit of light entering the housing (102) at an angle of about 45 degrees away from normal to the plane containing the front face of the photosensitive element (120) than to a unit of light entering the housing (102) normal to the plane.

7. The sensor assembly of claim 1, wherein:
the housing (102) has a back plate (118) opposite the major face 103), the back plate (118) configured to be mounted to a surface, and
the housing (102) is rotatable with respect to the back plate (118), for permitting rotation of the sensor assembly after the back plate (118) is mounted.

8. The sensor assembly of claim 2, wherein
the major face (103) of the housing has a circular shape and a first area,
the side edge (116) of the housing (102) has an area projection smaller than the first area.

9. The sensor assembly of claim 1, wherein the reflector (122) is arranged symmetrically with respect to the photosensitive element (120).

10. The sensor assembly of claim 1, wherein:
the reflector (122) has a first surface (124) oriented from about 30 degrees to about 60 degrees from the direction normal to the plane containing the front face of the photosensitive element (120);
the first surface (124) has a curvature, such that a projection of the first surface (124) in the plane containing the front face of the photosensitive element (120) curves around the photosensitive element (120);
the reflector (122) has a second surface (126) parallel to the major face (103) to block the front face of the photosensitive element (120) from being exposed to the light entering through the major face (103) of the housing (102) in the direction normal to the plane containing the front face of the photosensitive element (120); and
the housing (102) has a back plate (118) opposite the major face (103), the back plate (118) configured to be mounted to a surface, and the housing (102) is rotatable with respect to the back plate (118), for permitting rotation of the sensor assembly (120) after the back plate (118) is mounted.

## Patentansprüche

1. Eine Sensoranordnung (100), umfassend:
ein Gehäuse (102) mit einer Hauptfläche (103) und einer Seitenkante (116), wobei mindestens ein Abschnitt der Seitenkante (116) aus einem Material gebildet ist, das Licht leiten kann;
ein lichtempfindliches Element (120), das innerhalb des Gehäuses (102) positioniert ist, wobei das lichtempfindliche Element (120) eine Vorderseite umfasst, die der Hauptfläche (103) des Gehäuses (102) zugewandt ist; und
die Sensoranordnung **dadurch gekennzeichnet, dass** die Sensoranordnung ferner umfasst:
einen Reflektor (122), der innerhalb des Gehäuses (102) positioniert ist, wobei der Reflektor (122) so geformt ist, dass er das durch die Seitenkante (116) eintretende Licht auf das lichtempfindliche Element (120) leitet, und
wobei der Reflektor (122) ferner dazu ausgebildet ist, zu verhindern, dass die Vorderseite des lichtempfindlichen Elements (120) Licht ausgesetzt wird, das durch die Hauptfläche (103) in einer Richtung senkrecht zu einer Ebene eintritt, die die Vorderseite des lichtempfindlichen Elements (120) enthält.

2. Sensoranordnung nach Anspruch 1, wobei der Reflektor (122) eine erste Oberfläche (124) aufweist, die so ausgerichtet ist, dass eine Oberflächennormale der ersten Oberfläche etwa 30 Grad bis etwa 60 Grad zu der Richtung senkrecht zu der Ebene ausgerichtet ist, die die Vorderseite des lichtempfindlichen Elements (120) enthält.

3. Sensoranordnung nach Anspruch 2, wobei die Oberflächennormale der ersten Oberfläche etwa 45 Grad zu der Richtung senkrecht zu der Ebene ausgerichtet ist, die die Vorderseite des lichtempfindlichen Elements (120) enthält.

4. Sensoranordnung nach Anspruch 2, wobei die erste Oberfläche (124) eine Krümmung aufweist, so dass sich eine Projektion der ersten Oberfläche (124) in die Ebene, die die Vorderseite des lichtempfindlichen Elements (120) enthält, um das lichtempfindliche Element (120) herum krümmt.

5. Sensoranordnung nach Anspruch 2, wobei der Reflektor (122) eine zweite Oberfläche (126) parallel zur Hauptfläche (103) aufweist, um zu verhindern, dass die Vorderseite des lichtempfindlichen Elements (120) dem Licht ausgesetzt wird, das durch die Hauptfläche (103) in der Richtung senkrecht zu der Ebene eintritt, die die Vorderseite des lichtempfindlichen Elements (120) enthält.

6. Sensoranordnung nach Anspruch 1, wobei der Reflektor (122) dazu ausgebildet ist, dass das lichtempfindliche Element (120) eine größere Reaktion auf eine Lichteinheit aufweist, die in einem Winkel von etwa 45 Grad zu der Senkrechten der Ebene, die die Vorderseite des lichtempfindlichen Elements (120) enthält, eintritt, als für eine Lichteinheit, die senkrecht zu der Ebene in das Gehäuse (102) eintritt.

7. Sensoranordnung nach Anspruch 1, wobei:
das Gehäuse (102) eine Rückplatte (118) gegenüber der Hauptfläche (103) aufweist, wobei die Rückplatte (118) dazu ausgebildet ist, an einer Oberfläche montiert zu werden, und
das Gehäuse (102) in Bezug auf die Rückplatte (118) drehbar ist, um eine Drehung der Sensoranordnung nach der Montage der Rückplatte (118) zu ermöglichen.

8. Sensoranordnung nach Anspruch 2, worin
die Hauptfläche (103) des Gehäuses eine kreisförmige Form und einen ersten Bereich aufweist,
die Seitenkante (116) des Gehäuses (102) eine Flächenprojektion aufweist, der kleiner als der erste Bereich ist.

9. Sensoranordnung nach Anspruch 1, wobei der Reflektor (122) symmetrisch zu dem lichtempfindlichen Element (120) angeordnet ist.

10. Sensoranordnung nach Anspruch 1, wobei:
der Reflektor (122) eine erste Oberfläche (124) aufweist, die etwa 30 Grad bis etwa 60 Grad zu der Richtung senkrecht zu der Ebene ausgerichtet ist, die die Vorderseite des lichtempfindlichen Elements (120) enthält;
die erste Oberfläche (124) eine Krümmung aufweist, so dass eine Projektion der ersten Oberfläche (124) in die Ebene, die die Vorderseite des lichtempfindlichen Elements (120) enthält, um das lichtempfindliche Element (120) herum gekrümmt ist;
der Reflektor (122) eine zweite Oberfläche (126) parallel zur Hauptfläche (103) aufweist, um zu verhindern, dass die Vorderseite des lichtempfindlichen Elements (120) Licht ausgesetzt wird, das durch die Hauptfläche (103) des Gehäuses (102) in der Richtung senkrecht zu der Ebene eintritt, die die Vorderseite des lichtempfindlichen Elements (120) enthält; und
das Gehäuse (102) eine Rückplatte (118) gegenüber der Hauptfläche (103) aufweist, wobei die Rückplatte (118) dazu ausgebildet ist, an einer Oberfläche montiert zu werden, und das Gehäuse (102) in Bezug auf die Rückplatte (118) drehbar ist, um eine Drehung der Sensoranordnung (120) nach der Montage der Rückplatte (118) zu ermöglichen.

## Revendications

1. Ensemble (100) formant capteur, comprenant :
un boîtier (102), ayant une face (103) principale et un bord (16) latéral, au moins une partie du bord (116) latéral étant en un matériau capable de conduire de la lumière ;
un élément (120) photosensible, placé dans le boîtier (102), l'élément (120) photosensible comprenant une face avant, qui fait face à la face (103) principale du boîtier (102) ; et
l'ensemble formant capteur étant **caractérisé en ce qu'**il comprend, en outre :
un réflecteur (122), placé dans le boîtier (102), le réflecteur (122) étant conformé pour diriger de la lumière entrant, en passant à travers le bord (116) latéral, sur l'élément (120) photosensible, et
dans lequel le réflecteur (122) est configuré, en outre, pour empêcher que la face avant de l'élément (120) photosensible soit exposée à de la lumière entrant, en traversant la face (103) principale, dans une direction normale à un plan contenant la face avant de l'élément (120) photosensible.

2. Ensemble formant capteur suivant la revendication 1, dans lequel le réflecteur (122) a une première surface (124), orientée de manière à ce qu'une surface normale à la première surface fasse un angle d'environ 30 degrés à environ 60 degrés avec la direction normale au plan contenant la face avant de l'élément (120) photosensible.

3. Ensemble formant capteur suivant la revendication 2, dans lequel la surface normale à la première surface fait un angle d'environ 45 degrés avec la direction normale au plan contenant la face avant de l'élément (120) photosensible.

4. Ensemble formant capteur suivant la revendication 2, dans lequel la première surface (124) a une courbure, de manière à ce qu'une projection de la première surface (124) dans le plan contenant la face avant de l'élément (120) photosensible se courbe autour de l'élément (120) photosensible.

5. Ensemble formant capteur suivant la revendication 2, dans lequel le réflecteur (122) a une deuxième surface (126), parallèle à la face (103) principale, pour empêcher la face avant de l'élément (120) photosensible d'être exposé à de la lumière entrant ? en traversant la face (103) principale, dans la direction normale au plan contenant la face avant de l'élément (120) photosensible.

6. Ensemble formant capteur suivant la revendication 1, dans lequel le réflecteur (122) est configuré de manière à ce que l'élément (120) photosensible ait une réaction plus grande à une unité de lumière entrant dans le boîtier (102) sous un angle d'environ 45 degrés s'éloignant de la normale au plan contenant la face avant de l'élément (120) photosensible, qu'une unité de lumière entrant dans le boîtier (102) normalement au plan.

7. Ensemble formant capteur suivant la revendication 1, dans lequel :
le boîtier (102) a une plaque (118) arrière opposée à la face (103) principale, la plaque (118) arrière étant configurée pour être montée sur une surface, et
le boîtier (102) peut tourner par rapport à la plaque (118) arrière, pour permettre une rotation de l'ensemble formant capteur après que la plaque (118) arrière a été montée.

8. Ensemble formant capteur suivant la revendication 2, dans lequel :
la face (103) principale du boîtier a une forme circulaire et une première région,
le bord (116) latéral du boîtier (102) a une projection de région plus petite que la première région.

9. Ensemble formant capteur suivant la revendication 1, dans lequel le réflecteur (122) est disposé symétriquement par rapport à l'élément (120) photosensible.

10. Ensemble formant capteur suivant la revendication 1, dans lequel :
le réflecteur (122) a une première surface (124) faisant un angle d'environ 30 degrés à environ 60 degrés avec la direction normale au plan contenant la face avant de l'élément (120) photosensible ;
la première surface (124) a une courbure telle qu'une projection de la première surface (124) dans le plan contenant la face avant de l'élément (120) photosensible se courbe autour de l'élément (120) photosensible ;
le réflecteur (122) a une deuxième surface (126) parallèle à la face (103) principale, pour empêcher la face avant de l'élément (120) photosensible d'être exposéE à de la lumière entrant, en passant à travers la face (103) principale du boîtier (102), dans la direction normale au plan contenant la face avant de l'élément (120) photosensible ; et
le boîtier (102) a une plaque (118) arrière opposée à la face (103) principale, la plaque (118) arrière étant configurée pour être montée sur une surface et le boîtier (102) pouvant tourner par rapport à la plaque (118) arrière, pour permettre une rotation de l'ensemble (120) formant capteur, après que la plaque (118) arrière est montée.
